# FASCICULE DE BREVET EUROPEEN

(11) **EP 0 434 511 B1**
(45) Date de publication et mention de la délivrance du brevet: **08.12.1993**
(21) Numéro de dépôt: 90403572.2
(22) Date de dépôt: 13.12.1990
(51) Int. Cl.: G01V 1/153, G01V 11/00

(54) **Source sismique vibrante utilisable notamment dans des puits**
Vibrierende seismische Quelle, insbesondere anwendbar in Bohrlöchern
Vibrating seismic source, particularly for use in boreholes

(30) Priorité: 19.12.1989 FR 8916946
(43) Date de publication de la demande: 26.06.1991
(73) Titulaire: INSTITUT FRANCAIS DU PETROLE, 92502 Rueil-Malmaison (FR)
(72) Inventeur: Meynier, Patrick, F-78400 Chatou (FR)

(56) Documents cités:
- EP-A- 0 325 029
- FR-A- 1 295 059
- FR-A- 2 355 576
- GB-A- 2 112 903
- US-A- 3 244 252
- US-A- 4 394 754
- US-A- 4 784 206

## Description

La présente invention concerne un source vibrante et en particulier une source adaptée à être descendue dans un puits relativement étroit.

La source vibrante selon l'invention peut être utilisée notamment pour les besoins de la prospection sismique, dans le but d'explorer des zones souterraines susceptibles de renfermer des réserves d'hydrocarbures. Des signaux sismiques sont émis dans le sol et l'on reçoit au moyens de capteurs, les signaux réfléchis par les réflecteurs souterrains. Les signaux reçus sont enregistrés et l'on fait subir aux enregistrements des traitements systématiques de clarification, de manière à obtenir des coupes sismiques réellement représentatives de la configuration du sous-sol.

La prospection sismique peut être réalisée par exemple au moyen de sources vibrantes comportant un élément transmetteur qui est mis au contact du sol ou de la paroi d'un puits et des moyens pour appliquer des forces sinusoïdales à l'élément transmetteur. Les vibrations sont émises pendant un certain intervalle de temps suivi d'un intervalle de temps d'écoute où l'on reçoit les ondes réfléchies. La fréquence des ondes émises peut être constante mais on peut réaliser aussi des balayages en fréquence.

Pour engendrer des vibrations dans le sol, on utilise des vibrateurs du type piézo-électrique ou magnéto-strictif, des vibrateurs électro-magnétiques hydrauliques ou pneumatiques. Différents vibrateurs sont décrits par exemple dans les brevets U.S No. 4 805 727, 4 774 427, 4 715 470 ou 3 718 205.

On connait aussi notamment par les brevets suivants: FR 1 542 973, 1 428 395, 1 295 059 ou le brevet US 4 234 053, des sources vibrantes où les moyens moteurs comportent une ou plusieurs pièces tournantes excentrées dont les axes de rotation sont reliés rigidement à des éléments transmetteurs couplés avec le sol. La force développée croît avec la masse des pièces tournantes et avec leur vitesse de rotation. Avec une seule pièce tournante, on obtient une force tournante. Pour obtenir une force vibratoire suivant une direction de polarisation particulière, on constitue un couple de deux pièces que l'on fait tourner à des vitesses identiques mais en sens opposés l'une de l'autre, symétriquement par rapport à la direction choisie. Ce type de source présente l'inconvénient que la force vibratoire augmente avec la vitesse de rotation des excentriques et donc avec la fréquence des vibrations engendrées. Un agencement connu pour régulariser la force est décrit par exemple dans le brevet US-A-3 244 252, et il consiste à utiliser deux couples de pièces tournantes ayant même vitesse de rotation et des moyens pour introduire entre elles un déphasage angulaire que l'on fait varier en fonction de la fréquence des vibrations à engendrer. Mais en général, les déphasages angulaires sont obtenus par des moyens mécaniques tels que des pignons et des engrenages, qui compliquent la réalisation. Un contrôle parfait de l'amplitude de la force vibratoire engendrée en fonction de la fréquence, est difficile à obtenir avec ce type de compensateur purement mécanique. Il faut noter en outre
- que les vibrateurs à excentriques sont généralement assez volumineux : ils sont conçus pour fonctionner en surface et sont mal adaptés à fonctionner dans des puits ou forages le plus souvent très étroits; et
- que les compensateurs mécaniques pour réguler la force vibratoire en fonction de la fréquence, contribuent à accroître encore le volume des vibrateurs à excentriques et se prêtent mal à une télécommande.

La source vibrante selon l'invention permet d'éviter les inconvénients énoncés ci-dessus. Elle comporte un corps allongé, un câble multi-fonctions pourvu de conducteurs électriques pour relier le corps à une installation à distance et des moyens pour créer des vibrations par mise en rotation contrôlée de pièces excentrées, caractérisée en ce qu'elle comporte en combinaison des moyens d'ancrage du corps à une paroi d'application des moyens de pression pour actionner lesdits moyens d'ancrage, un ensemble de pièces excentrées réparties en deux groupes de pièces de masses sensiblement identiques, des moteurs électriques associés respectivement aux différentes pièces excentrées et adaptés à entraîner les deux groupes de pièces en rotation mais dans des sens inverses l'un par rapport à l'autre, les différents moteurs étant solidaires du corps et alignés sensiblement suivant un même axe, et un système électronique de pilotage dont au moins un module est contenu dans le corps et qui est adapté à ajuster la vitesse de rotation de chacun des moteurs ainsi que le déphasage angulaire des pièces excentrées de chacun des groupes, de manière à engendrer une force vibrante résultante polarisée suivant une direction particulière sensiblement perpendiculaire à l'axe commun d'alignement des différents moteurs, et dont l'amplitude varie de façon déterminée en fonction de la fréquence.

Le système électronique est adapté à piloter la rotation des pièces excentrées, de manière à obtenir par exemple une force résultante dont l'amplitude est sensiblement indépendante de la fréquence.

Suivant un mode de réalisation, un des deux groupes de pièces au moins peut comporter deux couples de pièces tournant dans le même sens.

Suivant un autre mode de réalisation, les deux ensembles de pièces excentrées comportent par exemple trois couples de pièces excentrées, deux des couples étant constitués de pièces excentrées de masse m définie tournant dans le même sens, le troisième couple étant constitué de deux pièces excentrées dont la masse m' est le double de la masse m des pièces des deux premiers couples, les pièces du troisième couple tournant dans le sens contraire des pièces des deux premiers.

Le système électronique de pilotage comporte par exemple des capteurs de position indiquant les positions angulaires respectives des différents moteurs électriques d'un moyen de détermination de la force résultante et des moyens d'asservissement pour corriger les écarts des différents moteurs électriques par rapport à des valeurs de consigne dépendant de la force résultante déterminée.

On utilise par exemple un système de pilotage comportant un ensemble de traitement programmé connecté aux capteurs de position et audit moyen de détermination, pour contrôler l'application aux moteurs de signaux dépendant des valeurs de consigne.

Suivant un mode de réalisation, les moteurs électriques sont des moteurs pas-à-pas et le système de pilotage comporte des moyens pour engendrer des impulsions de commande ainsi qu'un ensemble de traitement programmé pour faire varier les nombres des impulsions appliquées aux différents moteurs pas-à-pas de manière à obtenir la fréquence et la direction d'oscillation définies.

Lesdits moyens pour faire varier les nombres d'impulsions peuvent comporter par exemple des éléments de distribution des impulsions de commande aux différents moteurs pas-à-pas tels que chacun d'eux reçoive des séries d'impulsions compatibles avec la fréquence d'oscillation et la direction définie.

On utilise par exemple un système électronique où les deux modules électroniques comportent par exemple des ensembles de transmission de signaux sur les lignes du câble multi-fonctions et des ensembles d'interface pour coder et décoder les signaux électriques échangés par lesdites lignes.

Les moyens de pression de la source vibrante comportent par exemple une pompe hydraulique disposée dans le corps et entraînée par un moteur électrique relié à un générateur en surface par des conducteurs du câble multi-fonctions, et des vérins de commande communiquant par intermittence avec les moyens de pression.

Le système électronique de pilotage comporte par exemple des moyens de démultiplexage pour distribuer sélectivement des impulsions de commande aux différents moteurs électriques et des moyens de multiplexage pour transmettre en séquence les signaux des capteurs et du moyen de détermination de la force résultante. Le système de pilotage comporte par exemple des modules de commande commandés par l'ensemble de traitement programmé, pour faire varier le courant électrique appliqué aux moteurs électriques en fonction des valeurs de consigne.

La source vibrante selon l'invention présente de nombreux avantages:
- Avec des masselottes entraînées chacune par un moteur électrique indépendant, on obtient une structure mécanique simple et fiable que l'on peut intégrer dans un espace relativement restreint tel qu'un puits foré.
- Avec son système électronique de pilotage, on obtient un contrôle très fin de la force oscillante résultant aussi bien en intensité qu'en direction, et un changement très régulier de la fréquence d'oscillation.
- Les circuits de régulation en boucle fermée associés aux moteurs électriques continus ou aux moteurs pas-à-pas, peuvent très facilement inclure des circuits de transmission de grande longueur, ce qui est très favorable pour le contrôle de la source vibrante à distance. La source vibrante selon l'invention se prête donc particulièrement bien à une utilisation dans un puits.

D'autres caractéristiques et avantages de la source vibrante selon l'invention apparaîtront mieux à la lecture de la description ci-après d'un mode de réalisation décrit à titre d'exemple non limitatif, en se référant aux dessins annexés où:
- la Fig. 1 est un schéma de principe montrant un ensemble de pièces excentrées permettant d'obtenir une force vibrante de direction définie, dont l'amplitude est sensiblement constante quelle que soit la fréquence;
- la Fig. 2 montre la disposition des différentes parties d'une source adaptée à fonctionner dans un puits relativement étroit;
- la fig. 3 montre de façon plus détaillée, une source vibrante telle que celle schématisée à la Fig.2;
- la Fig. 4 montre un mode de réalisation d'un système hydraulique pour la commande de vérins actionnant les sabots d'ancrage; et
- la Fig. 5 montre un schéma synoptique du système électronique de pilotage de la source;

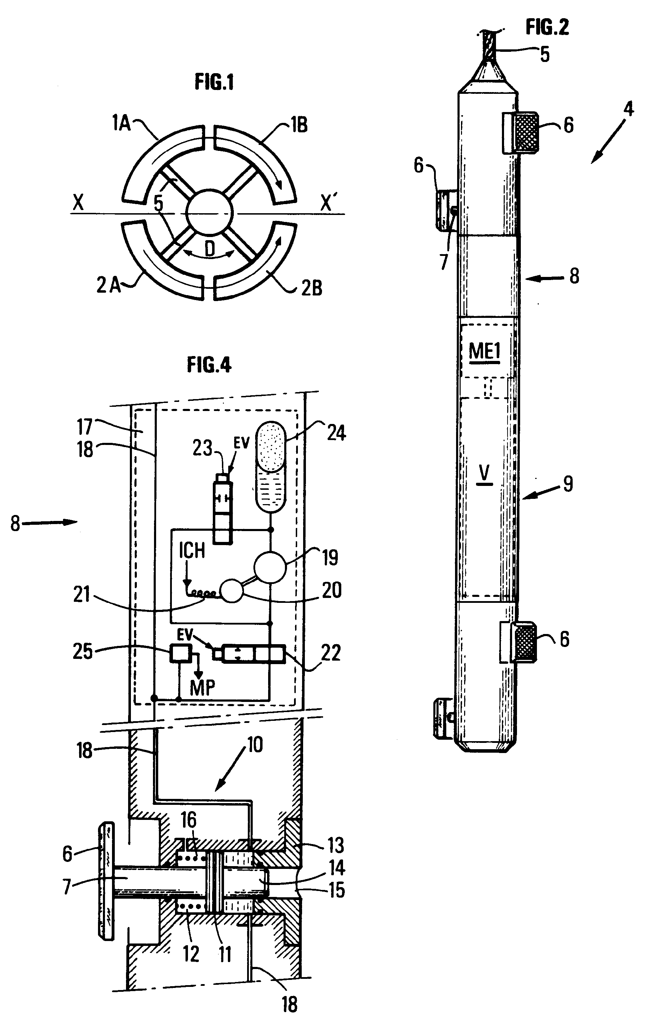

Sur le schéma de principe de la Fig.1, on voit qu'une force alternative polarisée est obtenue par la rotation d'un ensemble de pièces mécaniques excentrées. Cet ensemble comporte par exemple quatre masselottes 1A, 1B, 2A, 2B reliées chacune par un bras 3 à un arbre entraîné en rotation par des moyens moteurs M. Les arbres entraînant les masselottes sont distincts, mais ils sont mécaniquement couplés les uns aux autres en rendant solidaires les paliers qui les supportent. Les quatre masselottes ont la même masse et sont associées par couples. Les deux masselottes 1A et 1B sont entraînées en rotation dans un sens et les deux autres 2A et 2B sont entraînées dans le sens opposé. Les mouvements de rotation des deux couples sont symétriques par rapport à un axe XX'. La résultante des forces engendrées par la rotation des deux couples est une force oscillante dirigée suivant l'axe XX'. Son intensité dépend de la masse totale des pièces excentrées ainsi que de la longueur des bras 3, et elle varie comme le carré de la vitesse angulaire de rotation. Sa fréquence est proportionnelle à la vitesse de rotation des arbres. Pour rendre la force oscillante sensiblement indépendante de la vitesse angulaire, on écarte angulairement l'une de l'autre les deux pièces excentrées de chaque couple. On augmente le déphasage angulaire au fur et à mesure que la vitesse de rotation s'accroît.

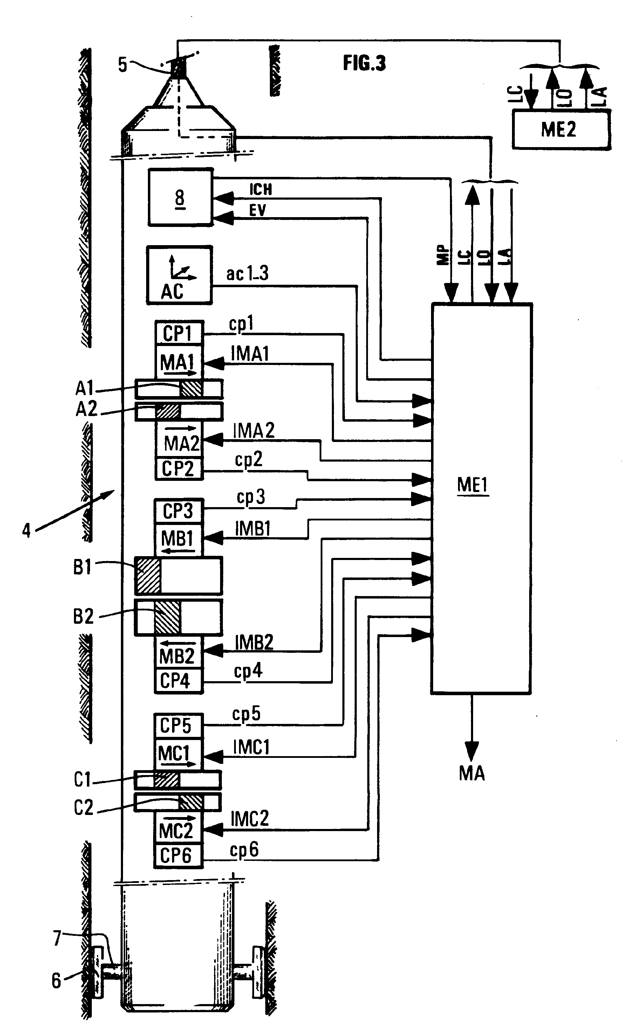

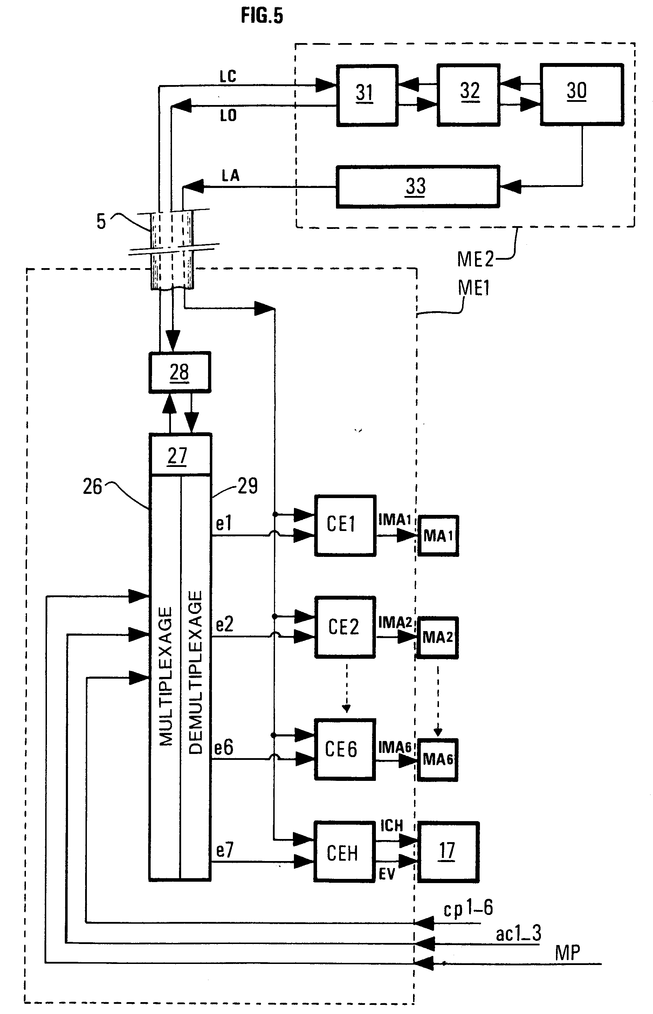

La source vibrante selon l'invention fonctionne suivant ce principe. Dans l'application à une source de puits, donnée à titre d'exemple, les éléments vibrants sont inclus (Fig. 2, 3) dans un corps rigide allongé 4 qui est descendu dans un puits à l'extrémité d'un câble électro-porteur 5 comprenant une pluralité de lignes conductrices. Le corps 4 est pourvu dans chacune de ses parties terminales opposées, d'organes mobiles d'ancrage 6. Ces organes 6 sont par exemple des sabots déplaçables radialement entre une position de retrait et une position avancée, où ils sont au contact des parois du puits. Les axes de déplacement des sabots sont disposés à 120° les uns des autres et de préférence avec un décalage longitudinal. Les sabots 6 sont fixés aux extrémités des tiges 7 de vérins hydrauliques. Ces vérins sont alimentés par une centrale hydraulique délivrant un fluide sous pression, comme on le verra en relation avec la Fig 4. Cette centrale est disposée dans un compartiment 8 adjacent à la partie centrale 9 du corps qui contient le vibrateur V associé à son module électronique de commande ME1 représenté plus en détail aux Fig.3 et 4.

Sur la Fig.3, on voit que la source vibrante comporte par exemple deux ensembles constitués de trois couples A1, A2, B1, B2 et C1, C2 de pièces ou masselottes excentrées. Les six masselottes sont entraînées respectivement par six moteurs électriques MA1, MA2, MB1, MB2, MC1, MC2. Les pièces A1, A2, C1 et C2 ont une masse sensiblement identique m et leurs moteurs les entraînent toutes suivant le même sens de rotation. Les deux masselottes B1 et B2 ont une masse m' qui est le double des précédentes et leurs moteurs MB1, MB2 les entraînent en sens contraire. On fait tourner tous les moteurs à la même vitesse de manière à obtenir deux ensembles de masselottes de moments cinétiques équivalents et de sens opposés et ainsi une force résultante oscillant suivant une direction définie. Un accéléromètre triaxial AC est disposé dans le corps de la source. Il délivre trois signaux composants ac1, ac2, ac3.

Suivant un premier mode de réalisation, les moteurs électriques MA1 à MC2 sont des moteurs à courant continu. Ils sont associés respectivement à six capteurs de position d'un type connu CP1, CP2...CP6 produisant respectivement des signaux électriques cp1...cp6 indicatifs de la réponse des moteurs associés, à des courants d'excitation qui leur sont appliqués. A l'intérieur du corps 4, est disposé un premier module électronique ME1 d'un système électronique ou ensemble de traitement comportant aussi un second module ME2 disposé hors du puits et communiquant avec le premier par trois lignes LA, LO et LC incluses dans le câble électro-porteur 5. Le premier module ME1 reçoit les signaux cp1 à cp6 engendrés par les capteurs CP1...CP6 et les signaux ac1-3 engendrés par l'accéléromètre AC, et il délivre des courants IMA1, IMA2, IMB1, IMB2, IMC1 et IMC2 pour l'entraînement respectif des moteurs MA1 à MC2. Il délivre aussi un courant ICH et un signal de déclenchement EV pour la centrale hydraulique dans le compartiment 8, comme on le verra en relation avec la Fig.4.

Les vibrations communiquées au corps rigide 4 par la rotation des masselottes A1-C2, sont transmises aux parois du puits par les sabots d'ancrage 6.

Chacun est fixé à une tige 7 d'un vérin d'ancrage 10 (Fig.4) comportant un piston 11 solidaire de la tige 7 et coulissant de façon étanche dans une chambre radiale 12 ménagée radialement dans le corps et fermée du côté du corps opposé au sabot 6, par un couvercle 13. Du côté du piston opposé au même sabot 6, la tige 7 comporte un prolongement 14 qui coulisse de façon étanche dans une ouverture 15 ménagée au travers du couvercle 13. Cette disposition permet l'équilibrage de la tige 7 qui est soumise à ses deux extrémités, à la pression régnant dans le puits. Un ressort 16 est disposé dans la chambre 12, de manière à pousser le piston 11 vers sa position de retrait. Les parties respectives des chambres 12, du côté des pistons 11 opposés aux ressorts 16, communiquent entre elles et avec la centrale hydraulique 17 du compartiment 8 par des canalisations 18. Cette centrale 17 comporte une pompe hydraulique 19 actionnée par un moteur électrique 20 recevant par des conducteurs électriques 21, un courant d'excitation provenant du module ME1. Une première électro-vanne 22 fait communiquer en position d'ouverture, la sortie de la pompe 19 avec les canalisations 18. Cette même sortie, en position d'ouverture d'une seconde électro-vanne 23, communique avec un accumulateur hydraulique 24. Selon la position des vannes 22 et 23, la pompe 19 communique avec l'accumulateur 24 et/ou les canalisations 18 d'alimentation des vérins. Un capteur de pression 25 est connecté sur la canalisation 18 et délivre un signal de mesure MP.

Par des signaux de déclenchement EV provenant du module électronique de commande ME1 qui va être décrit ci-après, on déclenche les vannes 22, 23, de manière à alimenter les différents vérins 10 et déplacer les sabots 6 vers leurs positions d'ancrage respectives au contact des parois du puits, quand le corps de la source est parvenu à la profondeur choisie pour l'émission de vibrations.

Le premier module ME1 du système électronique de pilotage comporte (Fig.5) un multiplexeur 26 sur les entrées duquel sont appliqués les signaux cp1, cp2... cp6 (cp1-6) engendrés par les détecteurs de position associés aux moteurs MA1 à MC2 du vibrateur, les signaux ac1, ac2, ac3 (ac1-3) engendrés par l'accéléromètre AC (Fig.3) et le signal MP fourni par le manomètre 25 indiquant la pression régnant dans les circuits d'ancrage de la centrale hydraulique 17. Les échantillons de signaux issus du multiplexeur 26 sont appliqués à un ensemble d'interface 27 adapté à numériser et coder les échantillons de signaux puis ensuite à un émetteur de ligne (non représenté) dans un ensemble de transmission 28. Celui-ci est connecté à la ligne LC du câble 5 affectée à la transmission des signaux mesurés vers le module de surface ME2. Les signaux d'ordres provenant du module de surface ME2 par la ligne LO du câble 5, sont reçus par un récepteur de ligne (non représenté) dans l'ensemble de transmission 28 et décodés dans l'ensemble d'interface 27, avant d'être appliqués à un démultiplexeur 29. Des sorties e1, e2... e6 de celui-ci sont connectées aux entrées de six modules de commande électroniques CE1, CE2... CE6 reliés à la ligne d'alimentation électrique LA du câble 5. Aux sorties des modules de commande CE1 à CE6 sont disponibles respectivement les courants IMA1 à IMC2 d'alimentation des différents moteurs du vibrateur V. Un commutateur électronique CEH est aussi relié à la ligne LA. A la réception d'un signal d'ordre issu d'une autre sortie e7 du démultiplexeur 29, le commutateur CEH délivre sur ses sorties le courant ICH d'entraînement de la pompe hydraulique 19 (Fig.4) et les signaux EV d'activation des électro-vannes 22, 23.

Le second module électronique ME2 à l'autre extrémité du câble 5, comporte un microprocesseur 30 programmé pour piloter les différents moteurs du vibrateur dans le puits et la centrale hydraulique 17 en fonction des signaux d'état cp1-6, ac1-3 et MP reçus des capteurs du vibrateur V. Le microprocesseur 30 est connecté aux lignes LC et LO par un ensemble de transmission 31 et un ensemble d'interface 32 analogues aux ensembles 27 et 28 à l'extrémité opposée du câble 5. Le second module ME2 comporte aussi un ensemble 33 d'alimentation électrique qui est connecté à la ligne LA.

La source vibrante selon l'invention est mise en oeuvre de la façon suivante:
- On la descend jusqu'à une profondeur déterminée et, sur une commande d'un opérateur, le microprocesseur 30 envoie par la ligne LO un signal de commande EV pour actionner les électro-vannes 22, 23 (Fig.4) et appliquer aux vérins du fluide sous pression de manière à écarter les sabots d'ancrage jusqu'à leur couplage avec les parois du puits.
- On commande alors le microprocesseur 30 pour qu'il applique un programme préétabli de pilotage des moteurs MA1 à MC2 correspondant à des paramètres de fonctionnement choisis: direction de polarisation de la force oscillante résultante, fréquence des vibrations à engendrer et éventuellement variation de la fréquence émise en fonction du temps dans les cas par exemple où l'on veut émettre une fréquence glissante pour les besoins d'opérations de prospection sismique. Le programme de pilotage tient compte à chaque instant des indications des capteurs dans le vibrateur pour ajuster les courants d'alimentation des différents moteurs.
- Pour maintenir sensiblement constante la force oscillante en fonction de la fréquence, les courants sont ajustés comme on l'a vu en relation avec la Fig.1, pour faire varier le déphasage angulaire entre les masselottes d'une même paire. Par une modification globale des déphasages angulaires, le microprocesseur est adapté à changer aussi la direction de polarisation de la force vibrante résultante.

Dans le mode de réalisation décrit, le contrôle de chaque moteur est réalisé au moyen d'une boucle de contrôle fermée comprenant les lignes LO et LC, le microprocesseur comparant à chaque instant les signaux de pilotage lancés vers le vibrateur avec leurs effets mesurés par les différents capteurs inclus dans celui-ci.

Suivant un autre mode de réalisation, l'entraînement des masselottes peut être effectué aussi en remplaçant les moteurs MA1 à MA6 à courant continu par des moteurs pas-à-pas. Chaque moteur reçoit du microprocesseur par l'intermédiaire des modules de commande CE1-CE6, des séquences d'impulsions de commande dont la fréquence est adaptée à la vitesse de rotation à obtenir. Les variations du déphasage angulaire entre les masselottes permettant d'obtenir un changement de polarité ou une adaptation de la force vibrante en fonction de la fréquence, sont obtenus en changeant sélectivement d'une quantité précise le nombre d'impulsions appliquées par unité de temps à l'un des moteurs de chaque couple ou bien aux deux selon les cas.

Le système électronique de pilotage est constitué dans le mode de réalisation décrit de deux modules ME1, ME2 éloignés l'un de l'autre et communiquant par l'intermédiaire de lignes. Il est bien évident que dans le cas d'une source de surface, le système électronique comporte un module unique tel que ME2 directement piloté par le microprocesseur 30 et alimenté par le générateur électrique 33.

On ne sortirait pas du cadre de l'invention en utilisant tout ensemble de pièces excentrées réparties en deux groupes de masses identiques tournant en sens inverse l'un par rapport à l'autre.

## Revendications

1. Source vibrante adaptée à fonctionner notamment dans un puits, comportant un ensemble de pièces excentrées tournantes réparties en deux groupes de pièces de masses sensiblement identiques et un ensemble de pilotage comportant des moyens moteurs pour entraîner les deux groupes de pièces excentrées en sens inverse l'un de l'autre et des moyens de déphasage angulaire pour faire varier la force vibrante engendrée par la mise en rotation des deux groupes de pièces, caractérisée en ce qu'elle comporte un corps allongé (4), un câble multi-fonctions (5) pourvu de conducteurs électriques pour relier le corps à une installation à distance, des moyens (6, 7) d'ancrage du corps à une paroi d'application, des moyens de pression (19, 20) pour actionner lesdits moyens d'ancrage, en ce que les moyens moteurs comportent une pluralité de moteurs électriques (MA1-MC2) associés respectivement aux différentes pièces excentrées, ces moteurs étant solidaires du corps et alignés sensiblement suivant l'axe longitudinal de celui-ci, et en ce que l'ensemble de pilotage (ME1, ME2) comporte au moins un module électronique de pilotage contenu dans le corps produisant pour chacun des moteurs électriques, des signaux de commande permettant d'ajuster individuellement leur vitesse de rotation ainsi que le déphasage angulaire des pièces excentrées de chacun des groupes.

2. Source vibrante selon la revendication 1, caractérisée en ce que le système électronique est adapté à piloter la rotation des pièces excentrées, de manière à obtenir une force résultante dont l'amplitude est sensiblement indépendante de la fréquence.

3. Source vibrante selon la revendication 1 ou 2, caractérisée en ce que l'un des deux groupes de pièces au moins comporte deux couples de pièces tournant dans le même sens.

4. Source vibrante selon l'une des revendications précédentes, caractérisée en ce que les deux ensembles de pièces excentrées comportent trois couples de pièces excentrées, deux des couples (A1, A2 et C1, C2) étant constitués de pièces excentrées de masse m définie tournant dans le même sens, le troisième couple (B1, B2) étant constitué de deux pièces excentrées dont la masse m' est le double de la masse m des pièces des deux premiers couples, les pièces du troisième couple tournant dans le sens contraire des pièces des deux premiers.

5. Source vibrante selon l'une des revendications précédentes, caractérisée en ce que le système electronique de pilotage comporte des capteurs de position (CP1-CP6) indiquant les positions angulaires respectives des différents moteurs électriques d'un moyen (AC) de détermination de la force résultante et des moyens d'asservissement pour corriger les écarts des différents moteurs électriques par rapport à des valeurs de consigne dépendant de la force résultante déterminée.

6. Source vibrante selon la revendication 5, caractérisée en ce que le système de pilotage comporte un ensemble de traitement programmé (30) connecté aux capteurs de position (CP1-CP6) et audit moyen (AC) de détermination, pour contrôler l'application aux moteurs de signaux dépendant des valeurs de consigne.

7. Source vibrante selon l'une des revendications précédentes, caractérisée en ce que les moteurs électriques sont des moteurs pas-à-pas et le système de pilotage comporte des moyens pour engendrer des impulsions de commande ainsi qu'un ensemble de traitement programmé pour faire varier les nombres des impulsions appliquées aux différents moteurs pas-à-pas de manière à obtenir la fréquence et la direction d'oscillation définies.

8. Source vibrante selon la revendication 7, caractérisée en ce que lesdits moyens pour faire varier les nombres d'impulsions comportent des éléments de distribution des impulsions de commande aux différents moteurs pas-à-pas tels que chacun d'eux reçoive des séries d'impulsions compatibles avec la fréquence d'oscillation et la direction définie.

9. Source vibrante selon l'une des revendications précédentes, caractérisée en ce que le système électronique de pilotage comporte un second module électronique (ME2) à distance du premier, relié à lui par des conducteurs (LO, LC, LA) du câble multi-fonctions (5).

10. Source vibrante selon l'une des revendications précédentes, caractérisée en ce que les deux modules électroniques (ME1, ME2) comportent des ensembles de transmission (28, 31) de signaux sur des lignes (LO, LC) du câble multi-fonctions (5) et des ensembles d'interface (26, 32) pour coder et décoder les signaux électriques échangés par lesdites lignes.

11. Source vibrante selon l'une des revendications précédentes, caractérisée en ce que les moyens de pression comportent une pompe hydraulique (19) dans le corps (4) entraînée par un moteur électrique (20) relié à un générateur (33) en surface par des conducteurs (LA) du câble multi-fonctions (5) et des vérins de commande (10) communiquant par intermittence avec les moyens de pression.

12. Source vibrante selon l'une des revendications précédentes, caractérisée en ce que le système électronique de pilotage comporte des moyens de multiplexage (26) pour transmettre en séquence les signaux desdits capteurs et dudit moyen (AC) de détermination, et des moyens de démultiplexage (29) pour distribuer sélectivement des impulsions de commande aux différents moteurs électriques.

13. Source vibrante selon l'une des revendications précédentes, caractérisée en ce que le système de pilotage comporte des modules de commande (CE1-CE6) commandés par l'ensemble de traitement programmé pour faire varier le courant électrique appliqué aux moteurs en fonction de valeurs de consigne.

14. Source vibrante comportant un corps (4), et des moyens pour créer des vibrations par mise en rotation contrôlée de pièces excentrées (A1-C2), caractérisée en ce qu'elle comporte en combinaison des moyens (6, 7) de couplage du corps à une paroi d'application, un ensemble de pièces excentrées réparties en deux groupes de pièces de masses sensiblement identiques, comportant chacun trois couples de pièces excentrées, deux des couples (A1, A2 et C1, C2) étant constitués de pièces excentrées de masse m définie tournant dans le même sens, le troisième couple (B1, B2) étant constitué de deux pièces excentrées dont la masse m' est le double de la masse m des pièces des deux premiers couples, les pièces du troisième couple tournant dans le sens contraire des pièces des deux premiers, la source comportant aussi des moteurs électriques (MA1-MC2) associés respectivement aux différentes pièces excentrées et adaptés à entraîner les deux groupes de pièces en rotation mais dans des sens inverses l'un par rapport à l'autre, les différents moteurs étant solidaires du corps et alignés sensiblement suivant un même axe, et un système électronique de pilotage (ME1, ME2) dont au moins un module est contenu dans le corps et qui est adapté à ajuster la vitesse de rotation de chacun des moteurs ainsi que le déphasage angulaire des pièces excentrées de chacun des groupes, de manière à engendrer une force vibrante résultante polarisée suivant une direction particulière sensiblement perpendiculaire à l'axe commun d'alignement des différents moteurs, et dont l'amplitude varie de façon déterminée en fonction de la fréquence.

## Claims

1. A vibrating source designed so as to operate in particular in a well, having an assembly of turning eccentric parts divided into two groups of parts of substantially identical mass and a control unit having motor means to drive the two groups of eccentric parts in opposite directions from each other and means for obtaining an angular phase shift so as to vary the vibratory force generated by rotation of the two groups of parts, characterised in that it comprises an elongated body (4), a multi-purpose cable (5) provided with electric conductors to link the body to a remote installation, means (6, 7) for fastening the body to a wall, pressure means (19, 20) to activate the fastening means, and characterised in that the motor means have a plurality of electric motors (MA1-MC2) associated respectively with the various eccentric parts, these motors being integral with the body and aligned substantially along the longitudinal axis of the body, and in that the control unit (ME1, ME2) has at least one electronic control module contained in the body producing control signals for each of the electric motors to enable their speed of rotation and the angular phase shifts of the eccentric parts of each of the groups to be individually adjusted.

2. A vibrating source in accordance with claim 1, characterised in that the electronic system is programmed to control the rotation of the eccentric parts so as to obtain a resultant force whose amplitude is substantially independent of the frequency.

3. A vibrating source in accordance with claim 1 or 2, characterised in that at least one of the two groups of parts has two pairs of parts turning in the same direction.

4. A vibrating source in accordance with one of the previous claims, characterised in that the two assemblies of eccentric parts have three pairs of eccentric parts, two of the pairs (A1, A2 and C1, C2) being made up of eccentric parts of a specified mass m rotating in the same direction, the third pair (B1, B2) being made up of two eccentric parts whose mass m' is twice that of the mass m of the parts of the first two pairs, the parts of the third pair rotating in the opposite direction to the parts of the first two pairs.

5. A vibrating source in accordance with one of the previous claims, characterised in that the electronic operating system has position sensors (CP1-CP6) indicating the respective angular positions of the various electric motors of a means (AC) for monitoring the resultant force as well as control means to correct any deviations of the different electric motors from a series of preset values dependent on the predetermined resultant force.

6. A vibrating source in accordance with claim 5, characterised in that the operating system has a programmed processing unit (30) connected to the position sensors (CP1-CP6) and to the monitoring means (AC) to control the application of the signals dependent on the pre-set values to the motors.

7. A vibrating source in accordance with one of the previous claims, characterised in that the electric motors have means for generating control pulses as well as a programmed processing unit to vary the numbers of pulses applied to the different step motors so as to obtain the preselected values of frequency and direction of oscillation.

8. A vibrating source in accordance with claim 7, characterised in that the means for varying the numbers of pulses have elements for transmitting the control pulses to the different step motors so that each of them receives series of pulses compatible with the frequency of oscillation and set direction.

9. A vibrating source in accordance with one of the previous claims, characterised in that the electronic operating system has a second electronic module (ME2) at a distance from the first, connected to it by the conductors (LO, LC, LA) in the multi-purpose cable (5).

10. A vibrating source in accordance with one of the previous claims, characterised in that the two electronic modules (ME1, ME2) have units (28, 31) for transmitting signals along the lines (LO, LC) of the multi-purpose cable (5) and interface units (26, 32) for coding and decoding the electric signals exchanged by the lines.

11. A vibrating source in accordance with one of the previous claims, characterised in that the pressure means has a hydraulic pump (19) inside the body (4) driven by an electric motor (20) connected to a generator (33) at the surface by means of the conductors (LA) in the multi-purpose cable (5) and control jacks (10) communicating intermittently with the pressure means.

12. A vibrating source in accordance with one of the previous claims, characterised in that the electronic operating system has multiplexing means (26) for transmitting in sequence the signals from the sensors and the monitoring means (AC), as well as de-multiplexing means (29) for transmitting the control pulses selectively to the different electric motors.

13. A vibrating source in accordance with one of the previous claims, characterised in that the operating system has control modules (CE1-CE6) controlled by the programmed processing unit to vary the electric current applied to the motors in accordance with the preselected values.

14. A vibrating source having a body (4) and means for creating vibrations by controlled rotation of eccentric parts (A1-C2), characterised in that it has a combination of means (6, 7) for bringing the body into contact with a wall, an assembly of eccentric parts divided into two groups of parts of substantially identical mass, each having three pairs of eccentric parts, two of the pairs (A1, A2 and C1, C2) being made up of eccentric parts of a predetermined mass m rotating in the same direction, the third pair (B1, B2) being made up of two eccentric parts whose mass m' is double the mass m of the parts of the first two pairs, the parts of the third pair rotating in the opposite direction of the parts of the first two pairs, the source also having electric motors (MA1-MC2) associated respectively with the different eccentric parts and adapted to drive the two pairs of parts in rotation but in opposite directions to each other, the various motors being integral with the body and aligned substantially along a same axis and an electronic control system (ME1, ME2) in which at least one module is contained in the body and which is programmed to adjust the speed of rotation of each of the motors as well as the angular shift phase of the eccentric parts of each of the groups so as to generate a resultant vibratory force polarised in a specific direction substantially perpendicular to the common axis of alignment of the different motors and whose amplitude varies in a predetermined way in relation to the frequency.

## Patentansprüche

1. Vibrierende Quelle einer Ausbildung derart, daß sie insbesondere in einem Bohrloch arbeitet, mit einer Anordnung von exzentrischen sich drehenden Bauteilen, die in zwei Gruppen von Bauteilen von im wesentlichen identischen Massen verteilt sind, sowie einer Leitanordnung, die Antriebseinrichtungen zum Antrieb der beiden Gruppen von Bauteilen, die in entgegengesetzten Richtungen zueinander exzentrisch sind, und Winkelphasenverschiebungsmittel, um die vibrierende Kraft zu verändern, die zum In-Drehung-Setzen der beiden Gruppen von Bauteilen erzeugt wurde, umfaßt, dadurch gekennzeichnet, daß sie einen länglichen Körper (4), ein Multifunktionskabel (5), das mit elektrischen Leitern versehen ist, um den Körper mit einer in der Entfernung befindlichen Installation zu verbinden, sowie Mittel (6, 7) zum Verankern des Körpers an einer Beaufschlagungswand, sowie Druckmittel (19, 20) umfaßt, um diese Verankerungsmittel zu betätigen, umfaßt; das die Antriebsmittel eine Vielzahl von Elektromotoren (MA1-MC2) umfassen, die jeweils den verschiedenen Exzenterbauteilen zugeordnet sind, wobei diese Motoren fest mit dem Körper verbunden und im wesentlichen längs der Längsachse hiervon ausgerichtet sind un daß die Leitanordnung (ME1, ME2) wenigstens einen elektronischen Leitmodul umfaßt, der in dem Körper enthalten ist und für jeden der Elektromotore Steuersignale erzeugt, die es ermöglichen, einzeln ihre Drehgeschwindigkeit sowie die Winkelphasenverschiebung der Exzenterbauteile jeder der Gruppe einzustellen.

2. Vibrierende Quelle nach Anspruch 1, dadurch gekennzeichnet, daß das elektronische System so ausgelegt ist, daß es die Drehung der Exzenterbauteile derart führt, daß eine resultierende Kraft erhalten wird, deren Amplitude im wesentlichen unabhängig von der Frequenz ist.

3. Vibrierende Quelle nach Anspruch 1 oder 2, dadurch gekennzeichnet, daß eine der beiden Gruppen von Bauteilen wenigstens zwei Paare von Bauteilen, die in der gleichen Richtung drehen umfaßt.

4. Vibrierende Quelle nach einem der vorhergehenden Ansprüche, dadurch gekennzeichnet, daß die beiden Anordnungen von Exzenterbauteilen drei Paare von Exzenterbauteilen umfassen, wobei zwei der Paare (A1, A2 und C1, C2) gebildet werden aus Exzenterbauteilen definierter Masse m, die in der gleichen Richtung drehen, wobei das dritte Paar (B1, B2) gebildet wird aus zwei Exzenterbauteilen, deren Masse m' das Doppelte der Masse m der Bauteile der beiden ersten Paare ist, wobei die Bauteile des dritten Paares in der Richtung entgegengesetzt zu den Bauteilen der beiden ersteren drehen.

5. Vibrierende Quelle nach einem der vorhergehenden Ansprüche, dadurch gekennzeichnet, daß das elektronische Leitsystem Positionswandler (CP1-CP6), welche die jeweiligen Winkelpositionen der verschiedenen elektrischen Motoren eines Mittels (AC) zur Bestimmung der resultierenden Kraft anzeigen und Steuerungsmittel umfaßt, um die Abweichungen der verschiedenen elektrischen Motoren bezogen auf Soll-Werte zu korrigieren, die von der bestimmten resultierenden Kraft abhängen.

6. Vibrierende Quelle nach Anspruch 5, dadurch gekennzeichnet, daß das Leitsstem eine Anordnung zur programmierten Verarbeitung (30) umfaßt, die mit den Positionswandlern (CP1-CP6) und mit dem Bestimmungsmittel (AC) verbunden ist, um die Beaufschlagung der Motoren mit Signalen abhängig von den Soll-Werten zu regeln.

7. Vibrierende Quelle nach einem der vorhergehenden Ansprüche, dadurch gekennzeichnet, daß die elektrischen Motoren Schrittschaltmotoren sind und das Leitsystem Mittel umfaßt, um Steuerimpulse zu erzeugen sowie eine Anordnung zur programmierten Verarbeitung, um die Impulszahlen zu verändern, die an die verschiedenen Schrittschaltmotoren gelegt werden, derart, daß die definierte Frequenz- und Schwingungsrichtung erhalten wird.

8. Vibrierende Quelle nach Anspruch 7, dadurch gekennzeichnet, daß die Mittel, um die Impulszahlen zu verändern, Verteilerelemente der Betätigungsimpulse an den verschiedenen Schrittschaltmotoren derart umfassen, daß jeder hiervon Reihen von Impulsen emplfängt, die mit der Schwingungsfrequenz und der definierten Richtung kompatibel sind.

9. Vibrierende Quelle nach einem der vorhergehenden Ansprüche, dadurch gekennzeichnet, daß das elektronische Leitsystem einen zweiten elektronischen Modul (ME2), und der Entfernung vom ersteren umfaßt, der mit diesem über Leiter (LO, LC, LA) des Mehrfunktionskabels (5) verbunden ist.

10. Vibrierende Quelle nach einem der vorhergehenden Ansprüche, daddurch gekennzeichnet, daß die beiden elektronischen Moduln (ME1, ME2) Anordnungen zur Übertragung (28, 31) von Signalen auf Leitungen (LO, LC) des Mehrfunktionskabels (5) und Interface-Anordnungen (26, 32) umfassen, um die elektrischen, über diese Leitungen ausgetauschten Signale, zu codieren und zu decodieren.

11. Vibrierende Quelle nach einem der vorhergehenden Ansprüche, dadurch gekennzeichnet, daß die Druckmittel eine hydraulische Pumpe (19) im Körper (4) umfassen, die von einem elektrischen Motor (20) angetrieben ist, der mit einem Generator (33) an der Oberfläche über Leiter (LA) des Multifunktionskabels (5) verbunden ist und Steuerzylinder (10) intermittierend mit den Druckmitteln in Verbindung stehen.

12. Vibrierende Quelle nach einem der vorhergehenden Ansprüche, dadurch gekennzeichnet, daß das elektronische Leitsystem Multiplexmittel (26) umfaßt, um nacheinander die Signale dieser Wandler und dieses Bestimmungsmittels (AC) zu übertragen sowie Demultiplexmittel (29), um selektiv Steuerimpulse auf die verschiedenen elektrischen Motoren zu verteilen.

13. Vibrierende Quelle nach einem der vorhergehenden Ansprüche, dadurch gekennzeichnet, daß das Leitsystem Stuermoduln (CE1-CE6) umfaßt, die von der Anordnung zur programmierten Verarbeitung gesteuert sind, um den elektrischen Strom variieren zu lassen, der an die Motoren als Funktion von Soll-Werten gelegt wird.

14. Vibrierende Quelle mit einem Körper (4) und Mitteln zur Erzeugung von Vibrationen durch geregeltes In-Drehung-Versetzen von extzentrischen Bauteilen (A1-C2), dadurch gekennzeichnet, daß sie in Kombination umfaßt: Mittel (6, 7) zur Koppelung des Körpers mit einer Beaufschlagungswand, eine Anordnung von exzentrischen Bauteilen, die in zwei Gruppen von Bauteilen im wesentlichen identischer Masse aufgeteilt sind und drei Paare von exzentrischen Bauteilen umfassen, wobei zwei der Paare (A1, A2 und C1, C2) gebildet werden von exzentrischen Bauteilen definierter Masse m, die in der gleichen Richtung drehen, wobei das dritte Paar (B1, B2) gebildet wird von zwei exzentrischen Bauteilen, deren Masse m' gleich dem Doppelten der Masse m der Bauteile der beiden ersten Paare ist, wobei die Bauteile des dritten Paares sich in der Richtung entgegengesetzt zu den Bauteilen der beiden ersteren drehen, die Quelle auch elektrische Motoren (MA1-MC2) umfaßt, die jeweils den verschiedenen exzentrischen Bauteilen zugeordnet und so ausgelegt sind, daß sie die beiden Gruppen von Bauteilen in Drehung, jedoch in zueinander entgegengesetzen Richtungen versetzen, wobei die unterschiedlichen Motoren fest mit dem Körper verbunden sind und im wesentlichen längs ein und der gleichen Achse ausgerichtet sind und ein elektronisches Leitsystem (ME1, ME2) von dem wenigstens ein Modul im Gehäuse enthalten ist und das so ausgelegt ist, daß es die Drehgeschwindigkeit jedes der Motoren sowie die Winkelphasenverschiebung der exzentrischen Bauteile jeder der Gruppen verstellt, derart, daß eine resultierende vibrierende Kraft erzeugt wird, die gemäß einer besonderen Richtung im wesentlichen senkrecht zur gemeinsamen Ausrichtungsachse der unterschiedlichen Motoren erzeugt wird und deren Amplitude in bestimmter Weise als Funktion der Frequenz variiert.
